# FASCICULE DE BREVET EUROPEEN

(11) **EP 3 913 252 B1**
(45) Date de publication et mention de la délivrance du brevet: **20.05.2026**
(21) Numéro de dépôt: 21174683.9
(22) Date de dépôt: 19.05.2021
(51) Int. Cl.: F16G 11/10

(54) **DISPOSITIF DE SERRAGE DE CABLE**
KLEMMVORRICHTUNG FÜR KABEL
DEVICE FOR CLAMPING A CABLE

(30) Priorité: 19.05.2020 FR 2005110
(43) Date de publication de la demande: 24.11.2021
(73) Titulaire: Compagnie Industrielle des Chauffe-Eau, 68300 Saint-Louis (FR)
(72) Inventeur: BOURDIN, Yvan, 90110 SAINT-GERMAIN-LE-CHATELET (FR); ANTOINE, Florian, 90000 BELFORT (FR)
(74) Mandataire: Plasseraud IP

(56) Documents cités:
- FR-A1- 2 511 813
- FR-A1- 2 914 158
- US-A- 2 884 673
- US-A- 422 720
- US-A- 5 392 496
- US-A1- 2006 179 685

## Description

### Domaine technique

L'invention se rapporte à un dispositif de serrage d'un câble, notamment pour un chauffe-eau ou tout autre système de production d'eau chaude.

### Technique antérieure

De nos jours, il est connu qu'un chauffe-eau doit respecter des normes strictes relatives en particulier à la sécurité des appareils électrodomestiques.

Or, actuellement, on prévoit, pour équiper un tel chauffe-eau, un dispositif de serrage de câble constitué d'un collier pour brider le câble à la position souhaitée. Néanmoins, ce type de collier peut ne pas présenter un comportement satisfaisant lorsque le câble est soumis à des tractions, torsions ou compressions. De surcroît, ce type de collier peut se révéler si peu pratique à mettre en place qu'un installateur du chauffe-eau peut être conduit à ne pas poser le collier, ce qui n'est bien entendu pas acceptable aux vues des normes de sécurité.

FR 2511813 A1 divulgue un connecteur amovible à effort de serrage constant.

US 422720 A divulgue un dispositif de serrage d'un arbre.

US 5392496 A et US 2884673 A divulguent un dispositif de serrage d'un câble.

Le but de la présente invention est de remédier au moins partiellement aux inconvénients de la technique antérieure.

### Exposé de l'invention

À cet effet, l'invention a pour objet un dispositif de serrage d'un câble, comprenant un corps muni d'un logement de passage du câble, et une partie mobile munie d'une extrémité d'appui et agencée pour se déplacer entre une position de serrage du câble, dans laquelle le câble est maintenu serré dans le dispositif de serrage par l'extrémité d'appui et une position de desserrage du câble, dans laquelle le câble est laissé libre dans le dispositif de serrage par l'extrémité d'appui.

Ainsi, grâce au dispositif de serrage selon la présente invention, le câble est parfaitement maintenu en position de serrage, même s'il doit subir des tractions, compressions ou torsions.

Selon un autre aspect, le dispositif comprend un plan incliné conformé pour coopérer avec la partie mobile.

Selon un autre aspect, le dispositif comprend un organe de commande du déplacement de la partie mobile, ledit organe de commande portant le plan incliné.

Selon un autre aspect, l'organe de commande du déplacement de la partie mobile comporte un fut de vissage d'une vis.

Selon un autre aspect, la partie mobile comprend un plan incliné conformé pour coopérer avec le plan incliné de l'organe de commande.

Selon un autre aspect, le dispositif comprend un moyen de solidarisation de la partie mobile au corps du dispositif de serrage.

Selon un autre aspect, le moyen de solidarisation comprend au moins un bras fixé à la partie mobile et au corps.

Selon un autre aspect, le dispositif comprend un système de montage du dispositif sur un produit.

Selon un autre aspect, le système de montage comprend au moins un moyen d'encliquetage du dispositif au produit.

Selon un autre aspect, le dispositif est conformé pour serrer un câble dont le diamètre est compris dans une plage de valeurs données.

L'invention a également pour objet une installation de production d'eau chaude, notamment d'eau chaude sanitaire, telle qu'un chauffe-eau, comprenant au moins un dispositif de serrage tel que décrit précédemment.

### Brève description des dessins

D'autres caractéristiques, détails et avantages de l'invention apparaîtront à la lecture de la description détaillée ci-après, et à l'analyse des dessins annexés, sur lesquels :
[Fig. 1] représente schématiquement une vue en perspective d'un dispositif de serrage selon la présente invention ;
[Fig. 2] illustre schématiquement une vue de dessus du dispositif de serrage de la figure 1 ;
[Fig. 3] illustre schématiquement une vue en perspective en coupe longitudinale du dispositif de serrage de la figure 1 ; et
[Fig. 4] illustre une autre vue en perspective du dispositif de serrage de la figure 1.

### Description de modes de réalisation

Comme il ressort des figures, l'invention a pour objet un dispositif de serrage de câble, notamment pour une installation de chauffage d'eau, telle qu'un chauffe-eau. Le dispositif de serrage est référencé 1 sur les figures.

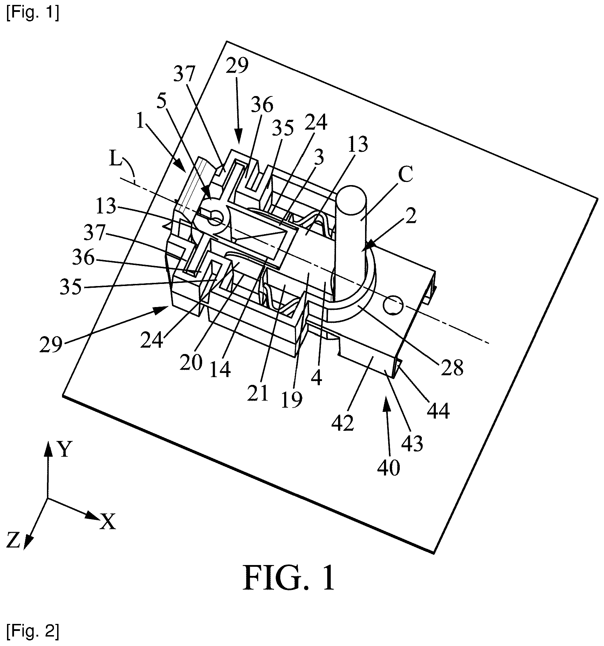

Pour simplifier le repérage dans l'espace, on a dessiné sur les figures un triplet d'axes orthogonaux (X, Y, Z). Bien entendu, le positionnement spatial présenté pour le dispositif de serrage 1 sur les figures 1 à 4 n'est bien entendu pas limitatif. On appelle L un axe selon la direction X et compris dans un plan (X, Y) de symétrie du dispositif de serrage.

Comme visible sur les figures, le dispositif 1 comprend un corps 2 muni d'un logement de passage d'un câble C. Le câble C est illustré sur la figure 1. On constate que le câble C s'étend sensiblement rectilignement le long de la direction Y.

Le dispositif 1 comprend également une partie mobile 3 munie d'une extrémité d'appui 4. Comme il va être détaillé, l'extrémité d'appui 4 est agencée pour se déplacer entre une position de serrage de câble, illustrée sur la figure 1, et une position de desserrage, non illustrée.

Dans la position de serrage, le câble C est maintenu serré dans le dispositif 1 par l'extrémité d'appui 4, tandis que, dans la position de desserrage, le câble C est laissé libre dans le dispositif 1 par l'extrémité 4.

Comme également illustré sur les figures, le dispositif 1 comprend un organe 5 de commande de la partie mobile 3.

On détaille maintenant l'organe de commande 5 puis la partie mobile 3.

L'organe de commande 5 comprend un fût de vissage 6 et un plan incliné 7 solidaires l'un de l'autre.

Le fût de vissage 6 comprend un cylindre 8 muni d'un logement 9 de réception d'une vis, non illustrée, ainsi que, préférentiellement, deux ailes opposées 10. Le cylindre 8 est délimité par une surface externe 11 tandis qu'une surface interne 12 délimite le logement 9 formant empreinte de vis. Les ailes 10 font saillie de part et d'autre de la surface externe 11, le long d'une direction parallèle à la direction Z, depuis une extrémité solidaire du cylindre 8 jusqu'à une extrémité libre.

Comme également illustré sur les figures 1 à 3, l'organe de commande 5 comprend deux parois opposées 13 et une paroi 14 de jonction entre les parois opposées 13.

Les parois 13 font saillie depuis la surface externe 12 du cylindre 8 en se dirigeant sensiblement parallèlement à la direction L. Les parois opposées 13 s'étendent chacune depuis une extrémité 15 solidaire de la surface 11 jusqu'à une extrémité référencée respectivement 16, 17, de la paroi de jonction 14.

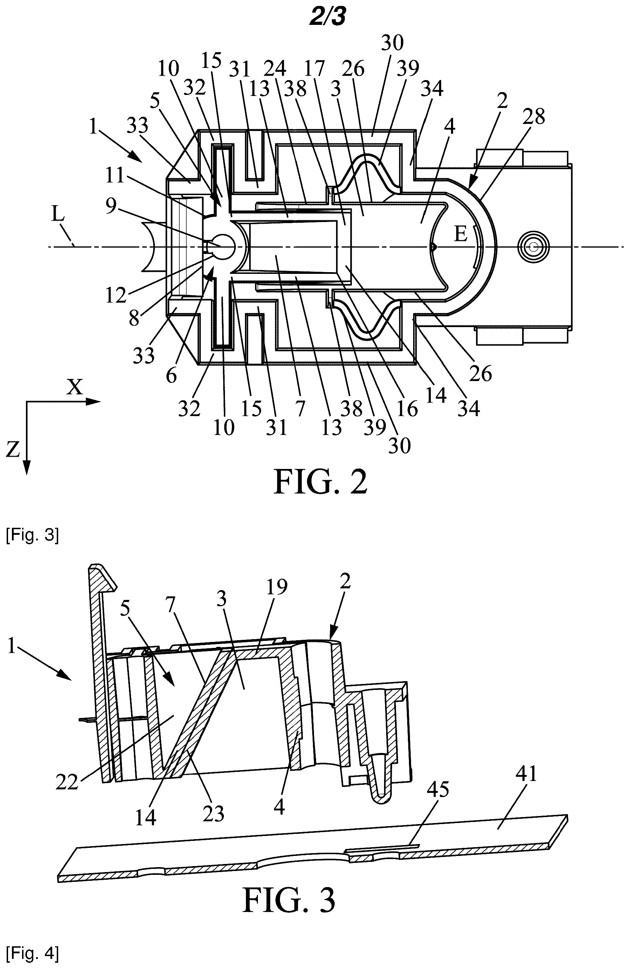

Comme il ressort de la figure 3, la paroi 14 porte le plan incliné 7 qui s'étend depuis le cylindre 8, de préférence au niveau d'un fond 18 du dispositif 1, jusqu'aux extrémités 16, 17 au niveau d'un plan supérieur 19 de la partie mobile 3.

On détaille maintenant la partie mobile 3.

Comme illustré sur les figures 1 à 3, la partie mobile 3 comprend une portion 20 de logement du plan incliné 7 et une portion poussoir 21.

La portion 20 est conformée pour recevoir les parois opposées 13 et la paroi de jonction 14.

Comme plus particulièrement visible sur la figure 3, la portion 20 comprend une cavité 22 délimitée par un fond 23 incliné selon la même inclinaison que le plan incliné 7, de sorte que le plan incliné 7 repose sur le fond 23. Le fond 23 s'étend depuis le cylindre 8 jusqu'au plan supérieur 19. Sur la figure, on constate que le plan supérieur 19 est un plan (X, Z). La cavité 22 est également délimitée par deux flancs 24 orthogonaux au plan 19 et s'étendant dans un plan (X, Y).

La portion poussoir 21 présente une forme générale de pavé délimité notamment par le plan supérieur 19 et deux faces latérales 26 parallèles et inscrites dans un plan (X, Y). Le pavé comprend également une extrémité libre de la portion poussoir 21. L'extrémité libre constitue l'extrémité d'appui 4 du dispositif de serrage 1. Sur les figures, l'extrémité d'appui 4 présente une forme concave.

Comme il ressort également des figures, le corps 2 du dispositif de serrage 1 forme une structure externe entourant la partie mobile 3 et l'organe de commande 5.

La structure externe 2 comprend une enceinte comportant principalement une portion concave 28 faisant face à l'extrémité d'appui 4, en étant espacée de celle-ci d'un espace E et formant logement de passage du câble C, comme visible sur la figure 2 notamment. La portion concave 28 comprend une portion rectiligne et une portion demi-cylindrique.

La structure externe 2 comprend également deux portions latérales opposées 29 disposées respectivement en regard des faces latérales 26, des flancs 24, des parois 13, des ailes 10 et du cylindre 8, en étant espacées de ceux-ci. Les portions 29 sont symétriques l'une de l'autre par rapport à l'axe L.

Chaque portion 29 comprend quatre parois parallèles, une paroi 30, une paroi 31, une paroi 32, une paroi 33, dans un plan (X, Y), les parois 30 et 32 étant disposées dans le prolongement l'une de l'autre, et les parois 31 et 33 étant dans le prolongement l'une de l'autre. Les parois 30, 32 sont plus éloignées de l'organe 5 et de la partie 3 que les parois 31 et 33.

Chaque portion 29 comprend également quatre parois parallèles dans un plan (Y, Z), une paroi 34, une paroi 35, une paroi 36 et une paroi 37. Les parois 34 à 37 sont orthogonales aux parois 30 à 33. La paroi 34 fait jonction entre la portion 28 et la paroi 30. La paroi 35 fait jonction entre les parois parallèles 30 et 31. La paroi 36 fait jonction entre les parois entre les parois parallèles 31 et 32. La paroi 37 fait jonction entre les parois parallèles 32 et 33.

Comme il ressort des figures, les parois 36, 32 et 37 forment un espace de maintien des ailes 10 présentant une section dans un plan (X, Z) en forme de U.

Comme il ressort également des figures, le dispositif de serrage 1 comprend deux nervures 38 opposées, disposées chacune contre un flanc 24 respectif et s'étendant dans un plan (Y, Z) dans l'espace entre les parois 30 et la partie mobile 3.

Le dispositif 1 comprend aussi deux bras 39 de solidarisation de la structure externe 2 à la partie mobile 3. Chacun des bras 39 est solidaire d'une nervure respective 38 et d'une paroi respective 34. Les bras 39 sont avantageusement flexibles, ce qui permet de maintenir la solidarisation de la structure externe 2 à la partie mobile 3, y compris lors du déplacement de la partie 3 entre les positions de serrage et desserrage.

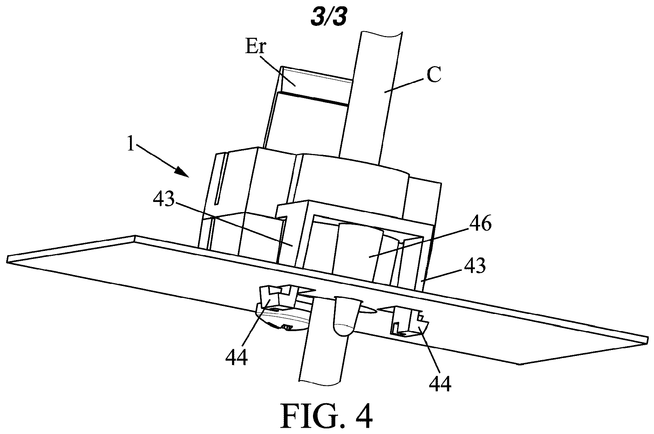

On note que, avantageusement, la partie mobile (de préférence injectée à part des autres éléments du dispositif 1) est montée encliquetée dans la structure externe 2 et ainsi solidarisée de la structure externe 2 via un ergot Er positionné au-dessus des ailes 10, comme plus particulièrement visible sur les figures 3 et 4. Cet agencement confère un caractère normatif au dispositif 1, puisque le dispositif 1 ne doit pas pouvoir être « perdable » pour deux raisons : système non fonctionnel si pièces perdues et risque d'étouffement.

Comme également illustré sur les figures 1 à 4, le dispositif de serrage 1 comprend un système 40 de montage du dispositif 1 sur un produit 41. Sur les figures, le produit 41 est un élément de châssis d'un chauffe-eau, de la forme d'une paroi.

Le système de montage comprend au moins un moyen d'encliquetage du dispositif 1 au produit 41. Sur le mode de réalisation illustré, le système de montage comprend deux moyens d'encliquetage 42 symétriques par rapport à l'axe L. Chaque moyen 42 comprend avantageusement deux parois 43, 44 sensiblement orthogonales l'une de l'autre, la paroi 43 étant conformée pour être insérée dans une fente 45 du produit 41 et la paroi 44 formant un ergot de maintien du dispositif 1. Ainsi, le dispositif 1 est amoviblement solidaire du chauffe-eau qu'il équipe tout en étant compatible avec différentes matières et épaisseurs du produit 41.

Le système de montage comprend également un logement 46 d'une vis de montage présentant une forme générale conique. Quand on visse la vis dans le logement 46, le cône s'expanse, ce qui bloque le dispositif 1 dans le produit 41.

On note que le montage en minimum deux points sur le produit 41 (encliquetage et vis de montage) permet d'éviter toute rotation du dispositif et don d'être contourné sans outil par un installateur, ce qui garantit un caractère normatif au dispositif 1.

On décrit maintenant une utilisation du dispositif de serrage 1 pour serrer le câble C.

Le câble C est disposé dans le logement formé par l'espace E entre la partie concave 28 de la structure externe 27 et l'extrémité d'appui 4, parallèlement à la direction Y.

En position de desserrage, l'extrémité d'appui 4 est suffisamment distante dans l'espace E pour laisser libre le câble C.

Pour serrer le câble, on positionne une vis dans le logement 9 du cylindre 8, puis on visse, ce qui déplace l'organe de commande 5, et notamment le fût de vissage 6, le long de l'axe Y, de haut en bas. Le fond 23 de la portion de logement 20 de l'organe 5 se déplace également de haut en bas, et déplace le plan incliné 7 et la portion poussoir 21 dans un mouvement principal de translation le long de l'axe L dans un sens de rapprochement de l'extrémité d'appui 4 vers la portion concave 28, jusqu'à ce que le câble C soit maintenu fermement dans l'espace E.

On note que le dispositif 1 est conformé pour serrer un câble dont une section, notamment le diamètre, est compris dans une plage de valeurs données. Pour ce faire, selon les dimensions de câbles à serrer, on choisit la distance de pente, la hauteur du déplacement du fût de vissage, et/ou la longueur et/ou géométrie de la portion de poussoir 21. Ainsi, le dispositif 1 est compatible avec plusieurs valeurs de section et de types de câble, conférant un caractère universel au dispositif 1.

Ainsi, le dispositif de serrage 1 assure un serrage fiable du câble C, en particulier contre toute traction dans la direction Y que subirait le câble C, puisqu'une telle traction aurait pour effet de renforcer le maintien du câble C dans le dispositif de serrage 1. De plus, le dispositif de serrage 1 selon la présente invention est adapté à différents diamètres de câble, selon le déplacement de la partie mobile 3. Le dispositif 1 permet également à l'installateur de monter le câble aisément, sans réglage préalable.

De surcroît, grâce aux moyens d'encliquetage, le dispositif 1 est aisé à mettre en place dans le chauffe-eau puis à le retirer, afin d'y serrer le câble sans souffrir des contraintes liées au lieu d'installation (encombrement, manque d'ergonomie, étroitesse du lieu ou de la zone sur le produit ...). Celui-ci est donc retiré, le câble y est monté puis ajusté afin de garantir la tenue souhaitée puis le serre-câble est remonté dans son emplacement.

On ajoute que le système est robuste à la compression du câble dans le système également grâce aux ergots mis en place dans les fentes 45.

Ainsi, le dispositif 1 est amovible, modulable à différents types et diamètres de câbles, tout en étant fiable.

## Revendications

1. Dispositif de serrage d'un câble, comprenant un corps (2) muni d'un logement de passage du câble (C), et une partie mobile (3) munie d'une extrémité d'appui (4) et agencée pour se déplacer entre une position de serrage du câble (C), dans laquelle le câble (C) est maintenu serré dans le dispositif de serrage (1) par l'extrémité d'appui (4) et une position de desserrage du câble (C), dans laquelle le câble (C) est laissé libre dans le dispositif de serrage (1) par l'extrémité d'appui (4), ledit dispositif de serrage (1) étant réalisé en matière plastique et comprenant :
- un plan incliné (7) conformé pour coopérer avec la partie mobile (3),
- un organe de commande (5) du déplacement de la partie mobile (3), ledit organe de commande (5) portant le plan incliné (7) et un fut de vissage d'une vis (6), la partie mobile (3) comprenant un plan incliné (23) conformé pour coopérer avec le plan incliné (7) de l'organe de commande (5),
ledit dispositif de serrage (1) étant **caractérisé en ce qu'**il comprend un moyen (39) de solidarisation de la partie mobile (3) au corps (2) du dispositif de serrage (1), ce moyen de solidarisation comprenant au moins un bras (39) flexible fixé à la partie mobile (3) et au corps (2).

2. Dispositif de serrage selon la revendication 1 **caractérisé en ce qu'**il comporte deux bras flexibles de solidarisation du corps (2) à la partie mobile (3).

3. Dispositif de serrage selon la revendication précédente, **caractérisé en ce que** la partie mobile (3) comprenant une portion (20) de logement du plan incliné (7) et une portion poussoir (21), ladite portion (20) comprenant deux flancs (24), ledit dispositif de serrage comprend deux nervures (38) opposées, disposées chacune contre un flanc (24) respectif, chacun desdits bras (39) étant solidaire d'une nervure respective (38) et d'une paroi (34) du corps (2).

4. Dispositif de serrage selon l'une quelconque des revendications 1 à 3, **caractérisé en ce qu'**il comprend un système (40) de montage du dispositif sur un produit (41) comportant au moins un moyen d'encliquetage (42) du dispositif au produit (41).

5. Dispositif de serrage selon l'une quelconque des revendications précédentes, conformé pour serrer une pluralité de diamètres de câble

6. Installation de production d'eau chaude, notamment d'eau chaude sanitaire, telle qu'un chauffe-eau, comprenant au moins un dispositif de serrage (1) selon l'une des revendications précédentes.

## Patentansprüche

1. Klemmvorrichtung für ein Kabel, umfassend einen Körper (2), welcher mit einer Aufnahme zur Durchführung des Kabels (C) und einem beweglichen Teil (3) versehen ist, welches mit einem Anlageende (4) versehen und dazu eingerichtet ist, sich zwischen einer Klemmposition des Kabels (C), in welcher das Kabel (C) zwischen der Klemmvorrichtung (1) durch das Anlageende (4) geklemmt gehalten wird, und einer Freigabeposition des Kabels (C) zu verlagern, in welcher das Kabel (C) in der Klemmvorrichtung (1) frei durch das Anlageende (4) gelassen wird, wobei die Klemmvorrichtung (1) aus Kunststoffmaterial hergestellt ist und umfasst:
- eine geneigte Ebene (7), welche dazu gebildet ist, mit dem beweglichen Teil (3) zusammenzuwirken,
- ein Steuerelement (5) der Verlagerung des beweglichen Teils (3), wobei das Steuerelement (5) die geneigte Ebene (7) und einen Gewindezylinder für eine Schraube (6) trägt, wobei der bewegliche Teil (3) eine geneigte Ebene (23) umfasst, welche dazu gebildet ist, mit der geneigten Ebene (7) des Steuerelements (5) zusammenzuwirken,
wobei die Klemmvorrichtung (1) **dadurch gekennzeichnet ist, dass** sie umfasst:
- ein Mittel (39) zum Verbinden des beweglichen Teils (3) mit dem Körper (2) der Klemmvorrichtung (1), wobei das Mittel zum Verbinden wenigstens einen flexiblen Arm (39) umfasst, welcher an dem beweglichen Teil (3) und an dem Körper (2) befestigt ist.

2. Klemmvorrichtung nach Anspruch 1, **dadurch gekennzeichnet, dass** sie zwei flexible Arme zum Verbinden des Körpers (2) mit dem beweglichen Teil (3) umfasst.

3. Klemmvorrichtung nach dem vorhergehenden Anspruch, **dadurch gekennzeichnet, dass** der bewegliche Teil (3) einen Abschnitt (20) zum Aufnehmen der geneigten Ebene (7) und einen Schubabschnitt (21) umfasst, wobei der Abschnitt (20) zwei Flanken (24) umfasst, wobei die Klemmvorrichtung zwei gegenüberliegende Rippen (38) umfasst, welche jeweils gegen eine entsprechende Flanke (24) angeordnet sind, wobei jeder der Arme (39) mit einer entsprechenden Rippe (38) und einer Wand (34) des Körpers (2) verbunden ist.

4. Klemmvorrichtung nach einem der Ansprüche 1 bis 3, **dadurch gekennzeichnet, dass** sie ein System (40) zum Montieren der Vorrichtung an einem Produkt (41) umfasst, umfassend wenigstens ein Mittel zum Einrasten (42) der Vorrichtung an dem Produkt (41).

5. Klemmvorrichtung nach einem der vorhergehenden Ansprüche, welche dazu gebildet ist, eine Mehrzahl von Kabeldurchmessern zu klemmen.

6. Warmwasser-Erzeugungsinstallation, insbesondere für sanitäres Warmwasser, wie beispielsweise ein Heißwasserbereiter, umfassend wenigstens eine Klemmvorrichtung (1) nach einem der vorhergehenden Ansprüche.

## Claims

1. A device for clamping a cable, comprising a body (2) provided with a room for the passage of the cable (C) therethrough, and a movable part (3) equipped with a bearing end (4) and arranged so as to move between a position of clamping the cable (C), in which the cable (C) is held clamped in the clamping device (1) by the bearing end (4), and a position of loosening the cable (C), in which the cable (C) is left free in the clamping device (1) by the bearing end (4), said clamping device (1) being made of plastic material and comprising:
- an inclined plane (7) shaped to cooperate with the movable part (3),
- a control member (5) for moving the movable part (3), said control member (5) carrying the inclined plane (7) and a threaded boss for a screw (6), the movable part (3) comprising an inclined plane (23) shaped to cooperate with the inclined plane (7) of the control member (5),
said clamping device (1) being **characterised in that** it comprises a means (39) for securing the movable part (3) to the body (2) of the clamping device (1), this securing means comprising at least one flexible arm (39) fastened to the movable part (3) and to the body (2).

2. The clamping device according to claim 1, **characterised in that** it comprises two flexible arms for securing the body (2) to the movable part (3).

3. The clamping device according to the preceding claim, **characterised in that** the movable part (3) comprises a portion (20) for housing the inclined plane (7) and a pusher portion (21), said portion (20) comprising two flanks (24), said clamping device comprises two opposite ribs (38), each disposed against a respective flank (24), each of said arms (39) being integral with a respective rib (38) and a wall (34) of the body (2).

4. The clamping device according to any one of claims 1 to 3, **characterised in that** it comprises a system (40) for mounting the device to a product (41) comprising at least one means for snapping (42) the device to the product (41).

5. The clamping device according to any one of the preceding claims, shaped to clamp a plurality of cable diameters.

6. A facility for producing hot water, in particular domestic hot water, such as a water heater, comprising at least one clamping device (1) according to one of the preceding claims.
